(19) Europäisches Patentamt
European Patent Office
Office européen des brevets

(11) Veröffentlichungsnummer: **0 115 845**
**B1**

# (12) EUROPÄISCHE PATENTSCHRIFT

(45) Veröffentlichungstag der Patentschrift: **07.03.90**

(51) Int. Cl.5: **C 25 B 11/00**, C 25 B 11/08, H 01 M 4/88

(21) Anmeldenummer: **84100981.4**

(22) Anmeldetag: **01.02.84**

## (54) Verfahren zur Herstellung einer katalytisch wirksamen Sauerstoffverzehr-Elektrode.

(30) Priorität: **04.02.83 DE 3303779**

(43) Veröffentlichungstag der Anmeldung: **15.08.84 Patentblatt 84/33**

(45) Bekanntmachung des Hinweises auf die Patenterteilung: **07.03.90 Patentblatt 90/10**

(84) Benannte Vertragsstaaten: **AT BE CH DE FR GB IT LI NL SE**

(56) Entgegenhaltungen:
**DE-A- 1 571 954**
**DE-A- 1 805 019**
**FR-A- 1 436 271**
**FR-A- 1 569 258**
**FR-A- 2 385 441**
**US-A- 3 305 400**

(73) Patentinhaber: **HOECHST AKTIENGESELLSCHAFT**
**Postfach 80 03 20**
**D-6230 Frankfurt am Main 80 (DE)**

(72) Erfinder: **Staab, Rudolf, Dr.**
**Am Flachsland 56**
**D-6233 Kelkheim (Taunus) (DE)**

**EP 0 115 845 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung einer katalytisch wirksamen auf Silberbasis Sauerstoffverzehrelektrode, die sich für den Einsatz in elektrochemischen Zellen, insbesondere Chloralkali-Elektrolysezellen und Brennstoffzellen, eignet.

Es ist bekannt, daß sich fein verteiltes, metallisches Silber als Katalysator für die Sauerstoffreduktion in Luftverzehrkathoden bei der Chloralkali-Elektrolyse eignet. Die zugrunde liegende chemische Reaktion folgt der Gleichung

$$4\,e^- + O_2 + 2\,H_2O \rightarrow 4\,OH^-.$$

Durch den Einsatz einer Sauerstoff verzehrenden Kathode bei der Chloralkali-Elektrolyse verringert sich die erforderliche Zellspannung theoretisch um 1,23 V gegenüber Elektrolysezellen, bei denen Wasserstoff an der Kathode abgeschieden wird.

Es besteht daher ein erhebliches Interesse daran, solche Elektroden bei der technischen Chloralkali-Elektrolyse einzusetzen, um elektrische Energie einzusparen. Insbesondere sollten solche Elektroden auch längere Zeit mit Luft als Oxidationsmittel betrieben werden können.

Die bekannten Verfahren zur Herstellung solcher Luftkathoden weisen eine Vielzahl von Verfahrensschritten auf. Nach dem Verfahren der DE-PS 27 13 855 wird zunächst ein Katalysator durch gleichzeitige Reduktion eines Silbersalzes und eines Quecksilbersalzes in Gegenwart eines Metallhydroxids hergestellt. Dieser Katalysator wird zerkleinert und anschließend mit einer Suspension von aufgeschlossenen Asbestfasern und einem Polytetrafluorethylen-Latex mittels Vibratoren vermischt, suspendiert und schließlich in ein flächenförmiges Gebilde (Elektrode) überführt.

Andere Verfahren benutzen zum Zerkleinern des Silber-Katalysators Ultraschallbäder, Schlagkreuzmühlen oder Zerhacker.

In allen Fällen ist nach der Zerkleinerung des Katalysators eine Hydrophobierung erforderlich, damit sich in der fertigen Elektrode eine Dreiphasen-Grenzfläche aus Katalysator, zu reduzierendem $O_2$ und Elektrolyt ausbilden kann. Eine ungenügend hydrophobierte Elektrode ist kaum in der Lage Sauerstoff umzusetzen. Zur Verbesserung der inneren Porenstruktur des Elektrodenmaterials ist ein Zusatz von porenbildenden Substanzen möglich, die vor dem Einsatz der Elektrode entfernt werden müssen.

FR-A-1569258 beschreibt die Herstellung einer porösen Sauerstoffverzehr-Elektrode, wobei man eine Dispersion eines organischen Polymers mit einem Sensibilisator oder einem aktivierendem Metallsalz in Kontakt bringt und dann durch Reduktion eines Silbersalzes auf dem Polymer metallisches Silber abscheidet. Die US-A-3305400 beschreibt die Herstellung eines Materials, das als Komponente zur Herstellung einer Sauerstoffverzehr-Elektrode dient. Dabei wird die Dispersion eines organischen Polymers mit einem elektrisch leitfähigen feinverteilten Füllmaterial, wie z. B. Aktivkohle, vereint und dann auf der entstehenden Suspension ein elektrokatalytisch aktives Material aus dem Salz eines Edelmetalls durch Reduktion abgeschieden. Die FR-A-1436271 beschreibt die Herstellung einer porösen Sauerstoffverzehr-Elektrode, wobei zunächst ein Silbersalz zu metallischem Silber reduziert wird. Man vermischt dieses mit der Dispersion eines organischen Polymers und gewinnt aus der Mischung ein elektrokatalytisch aktives Elektrodenmaterial.

Es bestand daher die Aufgabe, ein vereinfachtes Verfahren zur Herstellung einer katalytisch wirksamen Sauerstoffverzehr-Elektrode zu finden, das ohne nachträgliche Katalysator-Zerkleinerung auskommt und dennoch zu einer katalytisch sehr aktiven Elektrodenmaterial führt.

Die vorliegende Erfindung löst dieses Problem. Es wurde ein Verfahren zur Herstellung einer katalytisch wirksamen Elektrode gefunden, die aus Silber oder einer Silberlegierung und einem hydrophoben organischen Polymer besteht, für Sauerstoffverzehr-Elektroden, indem man zunächst eine Silbersalz-Lösung und ein Reduktionsmittel für Silber-I-Ionen in Gegenwart einer wäßrigen Dispersion bestehend aus Wasser, hydrophobem organischen Polymeren und Dispergiermittel vereint, wobei ein pH-Wert eingehalten wird, bei dem die eingesetzte wäßrige Dispersion als solche beständig ist, so daß die Silber-I-Ionen reduziert werden und ein Silber enthaltender Niederschlag ausfällt, man den Niederschlag von der wäßrigen Phase abtrennt und trocknet, das getrocknete Material aufschlämmt und nach Absaugung mit einem Stromableiter verpreßt.

Im Hinblick auf die weitere Verarbeitung des katalytisch wirksamen Materials auf eine Elektrode ist es vorteilhaft, wenn das eingesetzte organische Polymer thermoplastisch ist. In diesem Fall läßt sich durch Sintern, das heißt durch Verpressen unter Temperatureinwirkung, das zunächst pulverförmig anfallende Katalysatormaterial zu plattenförmigen Stücken verarbeiten.

Das erfindungsgemäße Verfahren liefert leistungsfähige Elektroden, das heißt Elektroden mit hohem Spannungsgewinn und geringer Gefahr des « Ertrinkens », weil das eingesetzte Polymere hydrophob ist. Unter einem « hydrophoben » Polymeren wird hier ein Produkt verstanden, das frei ist von polaren, wasserlöslich machenden Gruppen (Hydroxyl-, Carbonsäure- und Sulfonsäuregruppen). Einsetzbar sind Homopolymere wie Polyethylen und Polypropylen aber auch Mischpolymerisate, die sich z. B. von

Styrol/Butadien/Acrylnitril ableiten. Bevorzugt sind Polymere, die sich von ungesättigten halogenierten Kohlenwasserstoffen durch Polymerisation ableiten, wie z. B. PVC. Besonders bevorzugt als Polymere sind gesättigte fluorierte Kohlenwasserstoffe, wie Polytetrafluorethylen.

Da wäßrige Dispersionen eines organischen Polymeren eingesetzt werden, gestaltet sich die Reduktion und die weitere Aufarbeitung einfach. In der eingesetzten wäßrigen stabilen Dispersion verhalten sich die organischen Polymere wegen der ebenfalls vorhandenen Dispergier-Hilfsmittel hydrophil. Diese Hilfsmittel werden beim Auswaschen des Silber enthältenden Elektrodenmaterials zum größten Teil entfernt. Die letzten Reste werden zerstört bei der Herstellung der Elektrode durch Sintern. Ohne Entfernung dieser Hilfsmittel würde die Elektrode bald « ertrinken » und ihre Wirksamkeit einbüßen.

Es ist vorteilhaft, die Silbersalz-Lösung, die zur Reduktion dient, dem Reaktionsansatz langsam hinzuzufügen, da dann der Anteil des Silbers, der sich auf der Oberfläche der Polymer-Teilchen abscheidet, ein Maximum erreicht und die katalytischen Eigenschaften des Elektrodenmaterials besser sind. Ferner weist das Silber dann homogenere Verteilung und größere Oberfläche auf.

Als Silbersalz werden Verbindungen eingesetzt, die wasserlöslich sind. Bevorzugt ist Silbernitrat.

In der Praxis sind eine Reihe von Reduktionsmitteln für die Reduktion von Silber aus Silbersalzen bekannt. Beispielsweise kann man mit Hydrazin, Hydroxylamin oder Natriumborhydrid reduzieren. Je nach dem Reduktionsmittel ist auch der pH-Wert des Reaktionsansatzes einzustellen. Dabei ist die Stabilität der eingesetzten Dispersion zu beachten. Beispielsweise darf kein Reduktionsmittel verwendet werden, das nur in saurem Milieu wirksam ist, wenn unter diesen Bedingungen die Dispersion instabil ist. Bewährt hat sich beim erfindungsgemäßen Verfahren die Reduktion mit Formaldehyd, die bei pH 7-11, insbesondere pH 9-10 abläuft.

Bei der erfindungsgemäßen Abscheidung von Silber ist es vorteilhaft bei niedrigen Reaktionstemperaturen zu arbeiten, da dann der Silberniederschlag feinkörniger und katalytisch aktiver ist. Bewährt haben sich Reaktionstemperaturen von 0-50 °C, vorzugsweise 0-15 °C.

Besonders bevorzugt ist beim erfindungsgemäßen Verfahren der Einsatz einer wäßrigen Dispersion von Polytetrafluorethylen (PTFE) mit einer Teilchengröße zwischen 0,1 und 0,5 Mikrometer. Diese Dispersion, ist in Abhängigkeit von den verwendeten Tensiden, etwa im pH-Bereich von 4-11 stabil. In stärker alkalischem Milieu kommt es leicht zum frühzeitigen Ausflocken des Polymeren, was zu einer klumpigen groben Masse führt. Diese ist zur Herstellung von Elektroden nicht mehr geeignet. Es ist daher wesentlich, während der Zugabe des Reduktionsmittels den pH-Wert laufend zu kontrollieren. Besonders bewährt hat sich in diesem Fall eine Obergrenze des einzuhaltenden pH-Werts von 10 und insbesondere ein pH-Bereich von 9-10.

Im allgemeinen tropft man zu einer wäßrigen Dispersion von PTFE unter Kühlung und kräftigem Rühren eine wäßrige, neutrale oder schwach saure Lösung eines Silbersalzes, ferner ein Reduktionsmittel und ein Mittel zum Einhalten des pH-Wert zu. Für die meisten Reduktionsmittel wird man hierfür eine wäßrige alkalische Lösung, z. B. eine Alkalihydroxid-Lösung, zufügen. Der Feststoffgehalt der Dispersion soll nicht zu hoch sein, weil sonst bei der Belegung mit Silber ein dicker Teig entsteht. Dispersionen mit hohem Feststoffgehalt (z. B. über 35 Gew.-%) sollten daher zunächst mit Wasser (z. B. auf 20 Gew.-%) verdünnt werden.

Es ist auch möglich, das Reduktionsmittel und die PTFE-Dispersion zu mischen und zu der vorgelegten Mischung eine Silbersalzlösung und das Mittel zum Einhalten des pH-Werts (z. B. KOH) zu tropfen. Bei dieser Variante kann häufig das Verdünnen der Dispersion entfallen.

Nach Beendigung der Reduktion wird die mit Silber beaufschlagte Polymer-Dispersion von der überstehenden Mutterlauge abgetrennt und der Niederschlag durch Waschen und Trocknen zum fertigen Elektrodenmaterial aufgearbeitet. Das Trocknen soll die anhaltende flüssige Phase entfernen. Möglich ist ein Trocknen im Trockenschrank bei 90-110 °C. Beim Trocknen soll das Elektrodenmaterial noch nicht sintern. Man erhält ein sehr feinpulvriges Produkt, daß ohne weitere Zerkleinerungsschritte verwendet werden kann. Es kann nach dem Trocknen längere Zeit ohne Nachlassen der katalytischen Aktivität gelagert werden.

Das zugegebene Silbersalz läßt sich in theoretischer Ausbeute zu Silber reduzieren. Durch die Menge des zudosierten und reduzierten Silbersalzes läßt sich auch der Silberanteil im anfallenden Elektrodenmaterial in weiten Grenzen regulieren. Im allgemeinen wird der Silberanteil des Endprodukts zwischen 20 und 90 Gew.-% des Gesamtgewichts betragen. Besonders bevorzugt ist ein Silberanteil von 70 bis 85 Gew.-%. Demgemäß gilt für die Menge der Einsatzprodukte ein bevorzugtes Gewichtsverhältnis Silber/Feststoffanteil der Dispersion von 20 : 80 bis 90 : 10. Besonders bevorzugt ist ein Verhältnis von 70 : 30 bis 85 : 15.

Es ist auch möglich, der Silbersalzlösung Schwermetallsalze zuzufügen. Bevorzugt sind Salze von Metallen, die durch Alkalilaugen nicht angegriffen werden, wie Ni, Bi, Pt, Ru, Pd, Au, Cu und Hg. Auf diese Weise lassen sich katalytisch aktive Silber-Legierungen auf den Kunststoffteilchen abscheiden.

Es ist ein Vorteil des erfindungsgemäßen Verfahrens, daß die Abscheidung von Silber und die Herstellung des Silber/Polymer-Gemisches in einem einzigen Arbeitsgang erfolgt. Dies führt zur Einsparung von Arbeitsgängen (z. B. für Zerkleinern) und Chemikalien. Überraschend ist die hohe Aktivität des auf diese Weise erhaltenen Produkts.

Die Erfindung wird durch die folgenden Beispiele näher erläutert.

Beispiel 1

Zu 4,7 g einer käuflichen 40 %igen wäßrigen Polytetrafluorethylen-Dispersion (Handelsname Hostaflon(R) TF 5033) gibt man 80 ml Wasser und 30 ml einer 35 %igen Formaldehydlösung und kühlt diese Mischung auf 0 bis 10 °C ab. Hierzu tropft man im Verlauf von etwa einer Stunde einmal eine Lösung von 16,7 g Silbernitrat in 130 ml Wasser, sowie 130 ml einer 10 %igen Kaliumhydroxid-Lösung. Während des Zutropfens wird das Reaktionsgemisch kräftig durchmischt; die Reaktionstemperatur soll 15 °C nicht überschreiten. Die Dosierung der Kalilauge muß so durchgeführt werden, daß der pH-Wert nicht über 10 ansteigt; der pH-Wert sollte 7,5 nicht unterschreiten. Nach Beendigung der Reaktion läßt man den gebildeten Niederschlag absitzen und dekantiert die überstehende Mutterlauge ab. Der zurückbleibende Feststoff wird zunächst mit 100 ml Wasser, dann mit 200 ml Petrolether gewaschen und das so erhaltene Elektrodenmaterial bei 120 °C getrocknet (Ausbeute 12,3 g).

Der Silbergehalt des so hergestellten Materials beträgt etwa 85 Gew.-%.

Für die Herstellung einer Luftkathode werden 1,4 g des Elektrodenmaterials in 10 ml Isopropanol aufgeschlämmt. Die so erhaltene Suspension gießt man in ein Membranfilter mit einem Innendurchmesser von 4,2 cm und saugt den Alkohol ab. Der resultierende Filterkuchen wird anschließend mit einem Druck von etwa 65 bar in ein versilbertes Nickelnetz (Maschenweite = 0,25 mm, Drahtdicke = 0,16 mm) gepreßt, das später als Stromzuführung dient. Nach dem Trocknen bei 100 °C wird die Elektrode 15 Minuten bei 250 °C im Muffelofen gesintert (Atmosphäre: Luft). Zum Austesten der Elektrode dient eine durchsichtige Zelle aus Polyacrylat mit Halbzellenanordnung. Auf der Seite der Kathode, die dem Katholyt abgewandt ist, befindet sich eine Kammer, die von $O_2$ oder Luft durchströmt wird. Eine solche Kathode mit Kammer ist z. B. aus der US-PS 3926765 der Elektrode gegen eine gesättigte Kalomelelektrode (GKE) als Bezugselektrode gemessen.

Die folgende Tabelle gibt einen Überblick über den Potentialverlauf der getesteten Elektrode.

Tabelle 1

Elektrodenpotentiale gegen GKE in 33 %iger Natronlauge bei 80 °C

| Stromdichte i [kA/m²] | Potential ε vs GKE [mV] | |
|---|---|---|
| | $O_2$ | Luft |
| 0,5 | - 175 | - 310 |
| 1,0 | - 230 | - 390 |
| 1,5 | - 270 | - 460 |
| 2,0 | - 300 | - 530 |
| 2,5 | - 340 | - 590 |
| 3,0 | - 370 | - 650 |
| 3,5 | - 400 | - 710 |
| 4,0 | - 430 | - 750 |

Beispiel 2

Es werden 3 g einer käuflichen 60 %igen wäßrigen Polytetrafluorethylen-Dispersion (Handelsbezeichnung: Hostaflon(R) TF 5032) mit 150 ml Wasser verdünnt und auf 0 bis 10 °C abgekühlt. Hierzu tropft man im Verlauf von etwa einer Stunde einmal eine Lösung von 11,3 g Silbernitrat in 100 ml Wasser, die 20 ml 35 %igen Formaldehyd enthält, sowie 30 ml einer wäßrigen 12 molaren Kaliumhydroxid-Lösung. Während des Zutropfens wird das Reaktionsgemisch kräftig durchmischt, die Reaktionstemperatur soll 15 °C nicht überschreiten, die Dosierung der Kalilauge muß so durchgeführt werden, daß der pH-Wert nicht über 10 ansteigt; der pH-Wert sollte 7,5 nicht unterschreiten. Nach Beendigung der Reaktion läßt man den gebildeten Niederschlag absitzen und dekantiert die überstehende Mutterlauge ab. Der zurückbleibende Feststoff wird gewaschen, das Waschwasser abgesaugt und das so erhaltene Elektrodenmaterial bei 120 °C getrocknet (Ausbeute: 8,8 g). Der Silbergehalt des so hergestellten Materials beträgt etwa 80 Gew.-%.

Für die Herstellung einer Luftkathode wird 1 g des Elektrodenmaterials in etwa 10 ml Isopropanol aufgeschlämmt. Die so erhaltene Suspension gießt man in ein Membranfilter mit einem Innendurchmesser von 4,2 cm und saugt den Alkohol ab. Der resultierende Filterkuchen wird anschließend mit einer Kraft von 2,8 t in ein vergoldetes Nickelnetz gepreßt, das später als Stromzuführung dient. Nach dem Trocknen bei 90 °C wird die Elektrode 45 Minuten bei 280 °C in einem Muffelofen (Atmosphäre: Luft) gesintert.

Zum Austesten der Elektrode wird eine Halbzellenanordnung benutzt. Bei einer Temperatur von 80 °C werden in 20 und 33 %iger Natronlauge die Potentiale gegen eine gesättigte Kalomelelektrode (GKE) gemessen.

Die folgende Tabelle gibt einen Überblick über den Potentialverlauf der getesteten Elektrode.

Tabelle 2

Elektrodenpotentiale gegen GKE in 20 und 33 %iger Natronlauge bei 80 °C

| Stromdichte i | Potential ε vs GKE (20 % NaOH) [mV] | | Potential ε vs GKE (33 % NaOH) [mV] | |
|---|---|---|---|---|
| [kA/m²] | $O_2$ | Luft | $O_2$ | Luft |
| 0,5 | −170 | − 230 | −195 | − 290 |
| 1,0 | −200 | − 300 | −240 | − 360 |
| 1,5 | −225 | − 370 | −260 | − 420 |
| 2,0 | −250 | − 440 | −290 | − 500 |
| 2,5 | −265 | − 500 | −320 | − 580 |
| 3,0 | −290 | − 570 | −340 | − 650 |
| 3,5 | −310 | − 610 | −360 | − 750 |
| 4,0 | −320 | − 660 | −370 | − 850 |

Beispiel 3

In 12,5 g einer wäßrigen Polytetrafluorethylen-Dispersion (Handelsname Hostaflon(R) TF 5033-40 %) gibt man 240 ml Wasser und 45 ml einer 35 %igen Formaldehyd-Lösung und kühlt die Mischung auf 0 bis 10 °C ab. Hierzu tropft man im Verlauf von etwa 1,5 Stunden einmal eine Lösung von 27,7 g Silbernitrat und 3,9 g Quecksilber-(II)-nitrat in 380 ml Wasser, sowie 250 ml einer 10 %igen Kaliumhydroxid-Lösung. Während des Zutropfens wird das Reaktionsgemisch kräftig durchgemischt; die Reaktionstemperatur soll 15 °C nicht überschreiten. Die Dosierung der Kalilauge muß so durchgeführt werden, daß der pH-Wert nicht über 10 ansteigt; der pH-Wert sollte 7,5 nicht unterschreiten. Nach Beendigung der Reaktion läßt man den gebildeten Niederschlag absitzen, dekantiert die überstehende Mutterlauge ab und wäscht den zurückbleibenden Feststoff zunächst mit Wasser, dann mit Petrolether. Nach dem Trocknen bei 110 °C beträgt die Ausbeute an Katalysatormaterial 24,7 g. Der Silbergehalt des so hergestellten Materials beträgt etwa 70 Gew.-%, der Quecksilbergehalt etwa 10 Gew.-%.

Analog Beispiel 1 wird eine Elektrode hergestellt und in einer Halbzelle ausgetestet. Die folgende Tabelle gibt einen Überblick über den Potentialverlauf der getesteten Elektrode.

Tabelle 3

Elektrodenpotential gegen GKE in 33 %iger Natronlauge bei 80 °C

| Stromdichte i [kA/m²] | Potential ε vs GKE [mV] | |
|---|---|---|
| | $O_2$ | Luft |
| 0,5 | −160 | − 250 |
| 1,0 | −210 | − 320 |
| 1,5 | −250 | − 440 |
| 2,0 | −280 | − 540 |
| 2,5 | −300 | − 690 |
| 3,0 | −340 | − 820 |
| 3,5 | −360 | |
| 4,0 | −390 | |

Vergleichsbeispiel

Es wurde eine Elektrode nach einer Vorschrift der DE-PS 2 713 855 (Sp. 4, Z. 14-35) hergestellt und in einer Halbzelle ausgetestet.

Die folgende Tabelle gibt einen Überblick über den Potentialverlauf der getesteten Elektrode.

Tabelle 4

Elektrodenpotentiale gegen GKE in 33 %iger Natronlauge bei 80 °C

| Stromdichte i $[kA/m^2]$ | Potential ε vs GKE $[mV]$ | |
|---|---|---|
| | $O_2$ | Luft |
| 0,5 | −200 | −450 |
| 1,0 | −280 | −650 |
| 1,5 | −350 | −790 |
| 2,0 | −410 | −860 |
| 2,5 | −460 | −940 |
| 3,0 | −530 | −1170 |
| 3,5 | −580 | |
| 4,0 | −620 | |

Beispiel 4

Zu 18,8 g einer wäßrigen Polytetrafluorethylen-Dispersion (Handelsname Hostaflon(R) TF 5033-40 %) gibt man 560 ml Wasser und 90 ml einer 35 %igen Formaldehyd-Lösung und kühlt die Mischung auf 0 bis 10 °C ab. Hierzu tropft man im Verlauf von etwa 4 Stunden einmal eine Lösung von 60,64 g Silbernitrat und 6,48 g Quecksilber (II)-nitrat in 900 ml Wasser, sowie etwa 600 ml einer 10 %igen Kaliumhydroxid-Lösung. Während des Zutropfens wird das Reaktionsgemisch kräftig durchmischt, die Reaktionstemperatur soll 15 °C nicht überschreiten. Die Dosierung der Kalilauge soll so durchgeführt werden, daß der pH-Wert nicht über 10 ansteigt, und 7,5 nicht unterschreitet. Nach Beendigung der Reaktion läßt man den gebildeten Niederschlag absitzen, dekantiert die überstehende klare Mutterlauge ab und wäscht den zurückbleibenden Feststoff zunächst mit Wasser, dann mit Petrolether. Nach dem Trocknen bei 110 °C beträgt die Ausbeute an Katalysatormaterial 49,4 g (= 99 % d. Theorie). Der Silbergehalt des so hergestellten Materials beträgt etwa 77 Gew.-%, der Quecksilbergehalt etwa 8 Gew.-%.

Analog Beispiel 1 wird aus diesem Material eine Elektrode hergestellt und in einer Halbzelle ausgetestet. Die folgende Tabelle gibt einen Überblick über den Potentialverlauf der getesteten Elektrode.

Tabelle 5

Elektrodenpotential gegen GKE in 35 %iger Natronlauge bei 80 °C

| Stromdichte i $(kA/m^2)$ | Potential vs GKE ε (mV) | |
|---|---|---|
| | $O_2$ | Luft |
| 0,5 | — 150 | — 240 |
| 1,0 | — 180 | — 320 |
| 1,5 | — 225 | — 385 |
| 2,0 | — 240 | — 460 |
| 2,5 | — 265 | — 540 |
| 3,0 | — 280 | — 600 |
| 3,5 | — 305 | — 660 |
| 4,0 | — 330 | — 700 |

Beispiel 5

150 g eines Katalysatormaterials, welches zu 77 Gew.-% aus Silber und zu 8 % aus Quecksilber besteht, werden mit Isopropanol so angefeuchtet, daß eine leicht fließende teigartige Masse entsteht. Diese Masse verteilt man in gleichmäßiger Schichtdicke auf einem Nickelnetz von 16 cm Breite und 58 cm Länge und preßt das Katalysatormaterial mit einer Kraft von 40 t in das Nickelnetz. Die so hergestellte Rohelektrode wird eine Stunde bei 110 °C getrocknet und anschließend 4 Stunden bei Temperaturen zwischen 180 und 210 °C getempert.

Die fertige Elektrode wurde in eine Chloralkali-Membran-Elektrolysezelle eingebaut, die eine arbeitende Fläche von 9 cm Breite und 50 cm Höhe besitzt. Die Elektrolysezelle wird so betrieben, daß bei einer Temperature von 85 °C 33 Gew.-% Natronlauge produziert wird und eine Abreicherung der Sole von etwa 300 g/l NaCl auf etwa 200 g/l NaCl stattfindet. Als depolarisierendes Gas wird Sauerstoff in stöchiometrischer Menge benutzt. Innerhalb einer Testzeit von 7,5 Monaten stieg die Zellspannung, bei einer Stromdichte von 2 kA/m², von 2,15 V auf 2,20 V an. Auch danach war die Elektrode noch voll einsatzfähig. Der mittlere Energieverbrauch betrug in dieser Zeit rund 1 600 kWh/t NaOH bei einer Stromausbeute von etwa 92 %.

**Patentansprüche**

1. Verfahren zur Herstellung einer katalytisch wirksamen Sauerstoffverzehr-Elektrode bestehend aus Silber oder einer Silberlegierung und einem hydrophoben organischen Polymer, indem man zunächst eine Silbersalz-Lösung und ein Reduktionsmittel für Silber-I-Ionen in Gegenwart einer wäßrigen Dispersion bestehend aus Wasser, hydrophobem organischen Polymeren und Dispergiermittel vereint, wobei ein pH-Wert eingehalten wird, bei dem die eingesetzte wäßrige Dispersion als solche beständig ist, so daß die Silber-I-Ionen reduziert werden und ein Silber enthaltender Niederschlag ausfällt, man den Niederschlag von der wäßrigen Phase abtrennt und trocknet, das getrocknete Material aufschlämmt und nach Absaugung mit einem Stromableiter verpreßt.

2. Verfahren nach Anspruch 1, dadurch gekennzeichnet, daß man die Silbersalz-Lösung dem Reaktionsansatz langsam zufügt.

3. Verfahren nach Anspruch 1, dadurch gekennzeichnet, daß man eine Reaktionstemperatur von 0 bis 50, vorzugsweise 0 bis 15 °C einhält.

4. Verfahren nach Anspruch 1, dadurch gekennzeichnet, daß bezogen auf die Menge der Einsatzprodukte das Gewichtsverhältnis Silber/Feststoffanteil der Dispersion 20 : 80 bis 90 : 10, insbesondere 70 : 30 bis 85 : 15 beträgt.

5. Verfahren nach Anspruch 1, dadurch gekennzeichnet, daß eine wäßrige Dispersion von Polytetrafluorethylen eingesetzt wird.

6. Verfahren nach Anspruch 5, dadurch gekennzeichnet, daß bei der Reduktion ein pH-Wert von 4 bis 11, insbesondere 9 bis 10 eingehalten wird.

7. Verfahren nach Anspruch 1, dadurch gekennzeichnet, daß Formaldehyd als Reduktionsmittel verwendet wird.

**Claims**

1. A process for the preparation of a catalytically active oxygen-consuming electrode composed of silver or of a silver alloy and of a hydrophobic organic polymer, in which initially a silver salt solution is combined with a reducing agent for silver (I) ions in the presence of an aqueous dispersion composed of water, hydrophobic organic polymer and dispersant, with the pH being maintained at a value at which the aqueous dispersion which is employed is stable as such, so that the silver (I) ions are reduced and a silver-containing precipitate separates out, the precipitate is separated from the aqueous phase and dried, and the dried material is suspended and, after having been filtered off with suction, compressed with a conductor of current.

2. The process as claimed in claim 1, wherein the silver salt solution is added slowly to the reaction mixture.

3. The process as claimed in claim 1, wherein a reaction temperature of 0 to 50, preferably 0 to 15, °C is maintained.

4. The process as claimed in claim 1, wherein, relative to the amount of starting materials, the weight ratio of silver to the solids in the dispersion is 20 : 80 to 90 : 10, in particular 70 : 30 to 85 : 15.

5. The process as claimed in claim 1, wherein an aqueous dispersion of polytetrafluoroethylene is employed.

6. The process as claimed in claim 5, wherein a pH of 4 to 11, in particular 9 to 10, is maintained during the reduction.

7. The process as claimed in claim 1, wherein formaldehyde is used as the reducing agent.

**Revendications**

1. Procédé pour fabriquer une électrode à consommation d'oxygène douée d'une action catalytique et constituée d'argent ou d'un alliage d'argent et d'un polymère organique hydrophobe, procédé selon lequel on mélange d'abord une solution de sel d'argent et un réducteur pour des ions d'argent (I) en présence d'une dispersion aqueuse constituée d'eau, d'un polymère organique hydrophobe et d'un dispersant, tout en maintenant un pH auquel la dispersion aqueuse utilisée est stable telle quelle, de telle sorte que les ions d'argent (I) soient réduits et qu'il se forme un précipité contenant de l'argent, on sépare le précipité de la phase aqueuse, on le sèche, on met la matière séchée en suspension et, après essorage, on la moule par compression avec un conducteur.

2. Procédé selon la revendication 1 caractérisé en ce qu'on ajoute lentement la solution du sel d'argent au mélange réactionnel.

3. Procédé selon la revendication 1 caractérisé en ce qu'on maintient à une température réactionnelle de 0 à 50 °C, de préférence de 0 à 15 °C.

4. Procédé selon la revendication 1 caractérisé en ce que, par rapport à la quantité des produits mis en jeu, le rapport pondéral argent/teneur en matière solide de la dispersion est compris entre 20 : 80 et 90 : 10, plus particulièrement entre 70 : 30 et 85 : 15.

5. Procédé selon la revendication 1 caractérisé en ce qu'on utilise une dispersion aqueuse de polytétrafluoréthylène.

6. Procédé selon la revendication 5 caractérisé en ce qu'on maintient le pH entre 4 et 11, plus particulièrement entre 9 et 10, au cours de la réduction.

7. Procédé selon la revendication 1 caractérisé en ce qu'on utilise du formaldéhyde comme réducteur.